# EUROPEAN PATENT SPECIFICATION

(11) **EP 2 269 485 B1**
(45) Date of publication and mention of the grant of the patent: **02.12.2015**
(21) Application number: 09728451.7
(22) Date of filing: 27.03.2009
(51) Int. Cl.: A46D 1/00, B24D 11/00, C08L 23/06, C08L 59/04, C08L 83/04, D01F 6/78

(54) **POLYACETAL-CONTAINING BRUSH**
POLYACETAL-HALTIGE BÜRSTE
PINCEAU CONTENANT DU POLYACÉTAL

(30) Priority: 31.03.2008 JP 2008092991
(43) Date of publication of application: 05.01.2011
(73) Proprietor: Mitsubishi Gas Chemical Company, Inc., Tokyo 100-8324 (JP); National University Corporation Kyoto Institute of Technology, Sakyo-ku Kyoto-shi, Kyoto 606-8585 (JP)
(72) Inventor: OKAMURA, Akira, Yokkaichi-shi Mie 510-0886 (JP); NAGAI, Satoshi, Yokkaichi-shi Mie 510-0886 (JP); KOTAKI, Masaya, Kyoto-shi Kyoto 606-8585 (JP); SUKIGARA, Sachiko, Kyoto-shi Kyoto 606-8585 (JP); FUKAMI, Yasuhiko, Inuyama-shi Aichi 484-8502 (JP); KOBAYASHI, Hiroshi, Inuyama-shi Aichi 484-8502 (JP)
(74) Representative: Müller-Boré & Partner Patentanwälte PartG mbB
(86) International application number: PCT/JP2009/056322
(87) International publication number: WO 2009/123064

(56) References cited:
- WO-A1-2006/074889
- WO-A1-2006/074889
- DE-A1- 19 536 775
- DE-A1-102004 044 092
- JP-A- 2 269 828
- JP-A- 50 089 623
- US-A- 5 903 951

## Description

### TECHNICAL FIELD

The present invention relates to a brush containing polyacetal as a main component. In more detail, the present invention relates to an improved brush which does not easily damage metal and is preferable as a brush that is put into contact with metal when used.

### BACKGROUND ART

Polyacetal, which is an engineering plastic material, is excellent in mechanical properties, sliding characteristics, friction/abrasion characteristics, chemical resistance and the like, and is widely used for key components of automobiles, office automation devices and the like. Polyacetal has high crystallinity owing to a regular primary structure thereof, and uses thereof have been expanded mainly in the field of injection molding. Recently, it has been studied to make use of excellent features of polyacetal for extrusion molding, especially for fiber and film.

Conventionally, plastic materials used for components such as brushes have been mainly nylon and polyester. It was studied in the past to use polyacetal for brushes (Patent Document 1), but like in the case of other plastic materials, the influence exerted on the characteristics of the brush by the physical properties of polyacetal filaments has not been referred to at all. Especially, there is no disclosure on the material suitable to an industrial brush which is put into contact with metal when used.
Patent Document 1: Pamphlet of International Publication WO2006/074889 A1

Document DE 10 2004 044 092 discloses a brush comprising polyacetal-containing filaments wherein the filaments have a high flexural rigidity, said polyacetal contains additives like polyethylene or silicone.

### DISCLOSURE OF THE INVENTION

The present invention, made in light of the above-described situations, has an object of providing a brush which does not easily damage metal during contact therewith.

As a result of accumulating active studies, the present inventors found that the above problem can be solved by using polyacetal as a main component of filaments of the brush and making the filaments have a flexural rigidity in an optimum range.

Namely, the present invention relates to a brush as disclosed in the claims.

The brush according to the present invention does not easily damage metal during contact therewith, and so is expected to be preferable as an industrial brush.

### BEST MODE FOR CARRYING OUT THE INVENTION

Hereinafter, the present invention will be described in detail.

The brush according to the present invention is formed using polyacetal-containing filaments, and wherein the flexural rigidity per filament is 2 to 50 µg·m²/yarn, and especially preferably 2 to 20 µg·m²/yarn. A flexural rigidity per filament of 2 µg·m²/yarn or greater is required because with such a flexural rigidity, the linear strength of each of the filaments is necessarily high, and such filaments do not cause a trouble of, for example, being ruptured during the production of the brush. A flexural rigidity per filament of 50 µg·m²/yarn or less is required because with such a flexural rigidity, the filament material itself is appropriately flexible and does not damage the material which is in contact with the filament.

According to the invention, in order to improve the friction/abrasion characteristics of polyacetal, at least one selected from polyethylene wax, silicone oil and polyethylene resin is incorporated. Examples of the polyethylene wax include polyethylene, polyethylene copolymers, polyethylene wax obtained by denaturing these materials by oxidation, and denatured polyethylene wax obtained by acid-denaturing these materials. The above-listed materials may be used independently or in a mixture of two or more provided at an optional ratio. The number average molecular weight of the polyethylene wax is 1000 to 10000. When the number average molecular weight is 500 or greater, occurrence of bleed-out to the surface of a molded item can be prevented. By contrast, when the number average molecular weight is 15000 or less, the friction/abrasion characteristics, moldability and the like can be improved. The amount of the polyethylene wax is preferably 0.1 to 10 parts by weight and more preferably 0.1 to 3 parts by weight, with respect to 100 parts by weight of polyacetal.

Any conventionally known silicone oil is usable. Specific examples of the usable silicone oil include silicone oil formed of polydimethylsiloxane; substituted silicone oils obtained by partially or entirely substituting the methyl group of polydimethylsiloxane with hydrogen, or an alkyl group, a phenyl group, a phenyl halide group, an ester group, an ester halide group such as fluorine or the like, a polyether group or the like, each of these groups having a carbon atom number of 2 or greater; denatured silicone oils containing, in addition to polydimethylsiloxane, an epoxy group, an amino group, an alcoholic hydroxyl group, a polyether group or the like; alkylaralkyl silicone oils containing a dimethylsiloxane unit and a phenylmethylsiloxane unit; alkylaralkyl polyether denatured silicone oils containing a siloxane unit, having a structure in which the methyl group of the dimethylsiloxane unit is partially substituted with polyether, and a phenylmethylsiloxane unit; and the like. Among these, polymers of dimethylsiloxane, and copolymers of dimethylsiloxane and methylphenylsiloxane are preferable. The kinetic viscosity of the silicone oil at 25°C is 100 × 10⁴ to 1000 × 10⁴ cSt. The amount of the silicone oil is preferably 0.1 to 5 parts by weight and more preferably 0.1 to 3 parts by weight, with respect to 100 parts by weight of polyacetal.

The polyethylene resin has a number average molecular weight of 2 × 10⁴ to 50 × 10⁴, which is larger than that of polyethylene wax. The melting viscosity of the polyethylene resin is 0.1 to 100 g/10 minutes as represented by the melting index (MI) based on ASTM-D1238 (measuring conditions: 190°C; under a load of 2.16 kg). Examples of the polyethylene resin include low density polyethylene, straight chain low density polyethylene formed of a copolymer of ethylene and α-olefin, and super low density polyethylene. Polyethylene resins denatured therefrom with epoxy such as glycidylmethacrylate or the like or with an acid anhydride such as maleic anhydride or the like may also be usable. Among these, low density polyethylene is preferably usable. The "low density polyethylene resin" (encompassing straight chain low density polyethylene resins and copolymers thereof) refers to a polyethylene resin having a density of 0.910 to 0.940 g/cm³, and the "super low density polyethylene resin" refers to a polyethylene resin having a density of 0.875 g/cm³ or greater and less than 0.910 g/cm³. Low density polyethylene is preferable because it has lower crystallinity than that of high density polyethylene, and so is miscible with polyacetal to a certain degree and thus further improves the friction/abrasion characteristics of polyacetal. The amount of the low density polyethylene is preferably 0.1 to 10 parts by weight and more preferably 0.1 to 3 parts by weight, with respect to 100 parts by weight of polyacetal.

Polyacetal used for the present invention is a polymer having an acetal structure (-O-CRH-) (where R represents a hydrogen atom or an organic group) as a repeat structure. Usually, an acetal structure in which R is an hydrogen atom, namely, an oxymethylene group (-CH₂O-) is used as a main structural unit. A polyacetal resin used for the present invention is not limited to an acetal homopolymer formed only of this repeat structure and may be a copolymer (for example, block copolymer), a terpolymer or the like further containing at least one type of repeat structural unit other than the oxymethylene group; and also may have a branched or crosslinked structure instead of a linear structure.

Preferable examples of the structural unit other than the oxymethylene group include oxyalkylene groups which have a carbon number of 2 to 10 such as an oxyethylene group (-CH₂CH₂O-), an oxypropylene group (-CH₂CH₂CH₂O-), an oxybutylene group (-CH₂CH₂CH₂CH₂O-) and the like. Oxyalkylene groups which have a carbon number of 2 to 6 are more preferable, and the oxyethylene group is especially preferable. These oxyalkylene groups may have a branched or crosslinked structure having a carbon number of 2 to 6. The content of the oxyalkylene structural unit other than the oxymethylene group is preferably 0.2 to 15 mol%, more preferably 0.2 to 10 mol%, and especially preferably 0.3 to 6 mol%, with respect to polyacetal.

In the present invention, an embodiment in which polyacetal contains 0.2 to 15 mol% of oxyalkylene repeat unit having a carbon number of 2 or greater and 6 or less, which is represented by the following formula (1), is preferable.

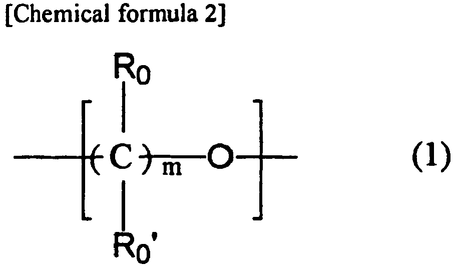

In the formula, R₀ and R₀' each represent a hydrogen atom, an alkyl group, an organic group having an alkyl group, a phenyl group or an organic group having a phenyl group. m represents an integer of 2 to 6.

Specific examples of the alkyl group include, for example, methyl, ethyl, n-propyl, i-propyl, n-butyl, t-butyl, and other aliphatic hydrocarbons having a molecular weight of 2000 or less.

Specific examples of the organic group having an alkyl group include compounds represented by the following formula (2). R₁ represents an aliphatic hydrocarbon having a molecular weight of 2000 or less. n represents an integer of 0 to 20.

-CH₂-O-(CH₂-O)n-R₁ (2)

Specific examples of the organic group having a phenyl group include compounds represented by the following formula (3) or (4). R₂ represents an aliphatic hydrocarbon having a molecular weight of 2000 or less or a polyalkyleneoxideglycol residual of C₂ to C₆, and Ph represents a benzene ring in which hydrogen may be partially substituted with an organic group.

-CH₂-O-R₂-Ph (3)

-CH₂-O-Ph (4)

A method for producing a polyacetal resin is optional, and a conventionally known method is usable. For example, a polyacetal resin containing an oxymethylene group and an oxyalkylene group having a carbon atom number of 2 to 4 as structural units can be produced by copolymerizing the following: a cyclic oligomer of an oxymethylene group such as, for example, a trimer or a tetramer of formaldehyde (trioxane or tetraoxane), and a cyclic oligomer containing an oxyalkylene group having a carbon atom number of 2 to 4, such as ethylene oxide, 1,3-dioxorane, 1,3,6-trioxocane, 1,3-dioxepane or the like.

The polyacetal resin used for the present invention is preferably a copolymer of a cyclic oligomer such as trioxane, tetraoxane or the like and ethylene oxide or 1,3-dioxorane. Among these, a copolymer of trioxane and 1,3-dioxorane is more preferable. Such a polyacetal resin preferably has a melting viscosity of 0.01 to 150 g/10 minutes as represented by the melting index (MI) based on ASTM-D1238 (190°C, under a load of 2.16 kg).

Known additives usable with polyacetal include a heat stabilizer and an antioxidant, which are preferably usable in the present invention.

Examples of the heat stabilizer which may be added or incorporated include amine-substituted triazine compounds such as melamine, melamine resin, methylolmelamine, benzoguanamine, cyanoguanidine, N,N-diarylmelamine, CTU guanamine(3,9-bis[2-(3,5-diamino-2,4,6-triazaphenyl)ethyl]-2,4,8,10-tetraoxaspiro[5,5]undecane), CMTU guanamine(3,9-bis[1-(3,5-diamino-2,4,6-triazaphenyl)methyl]-2,4,8,10-tetraoxaspiro[5,5]undecane), and the like; polyamides; urea derivative; hydrazine derivative, urethanes; and the like. Melamine is especially preferable.

Usually, the amount of such an additive is 0.01 to 5.0 parts by weight and preferably 0.01 to 0.5 parts by weight, with respect to 100 parts by weight of polyacetal. However, when such an additive is used as a material of the filaments as in the present invention, especially when, among the amine-substituted triazine compounds, a compound bonded with a molecule terminus of formaldehyde or an oxymethylene copolymer to form a crosslinked structure is added, care needs to be taken regarding the amount thereof. The amount of such an additive needs to be of a level at which the heat stability of the oxymethylene resin composition to be obtained can withstand the processing conditions, but also needs to be preferably 0.05 parts by weight or less. When the amount is greater than this, the stretchability is lowered.

Examples of the antioxidant include, for example, sterically hindered phenol. Specific examples of generally and commercially available phenol-based antioxidant include 1,6-hexanediol-bis[3-(3,5-di-t-butyl-4-hydroxyphenyl)propionate], triethyleneglycol-bis-3-(3-t-butyl-4-hydroxy-5-methylphenyl)propionate, pentaerythrityl-tetrakis-3-(3,5-di-t-butyl-4-hydroxyphenyl)propionate, 2,2'-methylenebis(6-t-butyl-4-methylphenol), 3,9-bis{2-[3-(3-t-butyl-4-hydroxy-5-methylphenyl)propionyloxy]1,1-dimethylethyl}-2,4,8,10-tetraoxaspiro[5,5]undecane, N,N'-hexane-1,6-diylbis[3-(3,5-di-t-butyl-4-hydroxyphenyl)propionamide], 1,6-hexanediylester 3,5-bis(1,1-dimethylethyl)-4-hydroxybenzenepropionate, and the like. Among these, triethyleneglycol-bis-3-(3-t-butyl-4-hydroxy-5-methylphenyl)propionate, pentaerythrityl-tetrakis-3-(3,5-di-t-butyl-4-hydroxyphenyl)propionate, and 1,6-hexanediol-bis[3-(3,5-di-t-butyl-4-hydroxyphenyl)propionate] are preferably usable. The amount thereof is 0.01 to 5 parts by weight, preferably 0.01 to 2.0 parts by weight, and especially preferably 0.02 to 1.0 parts by weight, with respect to 100 parts by weight of polyacetal. When the amount of the sterically hindered phenol is insufficient, the decomposition at the time of processing causes reduction of the molecular weight and also contamination with the decomposed gas to an unignorable level. This causes the problem of reduction of processability. By contrast, when the amount of the sterically hindered phenol is excessive, there occurs too much bleed. This spoils the external appearance of the processed item.

Known additives and/or fillers may further be added in the range in which the original object of the present invention is not spoiled. Examples of such additives include, for example, crystal nucleators, antioxidants other than the above, plasticizers such as polyalkyleneglycol and the like, matting agents, foaming agents, lubricants, releasing agents, antistatic agents, ultraviolet absorbers, photostabilizers, heat stabilizers, deodorants, flame retarders, sliding agents, perfumes, antibacterial agents, and the like. Examples of the fillers include glass fiber, talc, mica, calcium carbonate, potassium titanate whisker, and the like. In addition, a pigment or a dye may be added to obtain a desired color tone. Also, any of various monomers, a coupling agent, a terminus processing agent, any of other resins, wood flour, starch or the like may be added to cause denaturing.

For processing a material containing polyacetal as a main component into filaments, a known method is usable. Especially, an apparatus for monofilament or multifilament which uses a melt spinning device is preferably usable. A general melt spinning device is usable, which includes a monoaxial extruder having a function of controlling the temperature by heating a cylinder, a gear pump for allowing spinning to be performed through a nozzle in a quantitative manner, a screen for removing foreign substances, and a spinning nozzle. The shape of the holes of the spinning nozzle may be changed to produce filaments having a strange-shaped cross-section. For heating the cylinder, the gear pump and the nozzle, a temperature in the range of the melting point of the material to 240°C is chosen. Especially for avoiding gas generated by thermolysis from being inadvertently mixed, a temperature of 180 to 220°C is commonly usable.

In order to obtain a desired flexural rigidity, appropriate stretching needs to be done.

A monofilament is spun and drawn out from the nozzle, and then is once solidified by a cooling tank and then heated to be stretched in-line or off-line. What needs attention at the time of spinning is circularity of the filament. The circularity is represented by the ratio between the longer diameter and the shorter diameter (longer diameter/shorter diameter) of the cross-section of the filament. As the difference between this value and 1 is larger, the circularity is lower. Preferably, the circularity is adjusted to 1.1 or less by controlling the swing of the thread right below the nozzle. When the circularity is low, anisotropy is caused when the filament is processed into a brush. As a result, the expected characteristics may not be obtained at a sufficiently high level or may not be obtained at all. By contrast, when the strain rate at the time of stretching is high, the thread is likely to be ruptured. Therefore, multi-stage stretching is preferable. In order to perform uniform heating, heating is preferably provided by contact with a liquid such as steam, warm water, oil or the like instead of by contact with hot air or a heater.

A multifilament is drawn out from the spinning nozzle, taken up while being air-cooled, and heated to be stretched like above. It is known that while the multifilament is being taken up while being air-cooled, the same effect as that of stretching is provided by raising the rotating rate for take-up. A prescribed flexural rigidity may be occasionally realized only by controlling the conditions of ejection rate and the take-up rate.

A plurality of the obtained filaments are made into a bound to obtain a brush. There is no specific limitation on the shape of the brush, and the brush may be a channel brush, a planting-type brush, a cylindrical/planar/umbrella-shaped brush, a wheel brush, a spiral brush, a cap brush, a bevel brush, a broom-type brush or the like. With the features of polyacetal, i.e., chemical resistance, creep resistance, and friction/abrasion resistance being well utilized, such a brush is usable for various applications; for example, for cleaning, for painting, for elimination of static electricity from a motor or the like, as a support of a metal plate, and the like.

### Examples

Hereinafter, the present invention will be described in detail by way of examples and a comparative example.

### (a) Flexural rigidity

The flexural rigidity (µg·m²/yarn) per monofilament included in the brush was measured by a rotating vertical cantilever method using a pure bending tester (KES-FB2) produced by Kato Tech Co., Ltd. at a bending deformation rate of 0.5 cm⁻¹/sec., at a curvature of 2.5 cm⁻¹, and in the mode of one cycle.

### (b) Scratch test

The brush was vertically set on a metal plate, and a prescribed static load was applied thereon. A scratch test was performed repeatedly in only one direction using a scratch tester produced by Kato Tech Co., Ltd. at a test rate of 100 mm/sec. until any scratch was recognized by a stereoscopic microscope.

### (1) POM-1

To 100 parts by weight of polyacetal containing 0.5 mol% of oxyalkylene repeat unit having a carbon number of 2 or greater and 6 or less, which is represented by the above formula (1), the following was added: 1.5 parts by weight of Hi-Wax 410P produced by Mitsui Chemicals Inc. (general low density type; acid value: 0 mg KOH/g; ethylene-propylene copolymerized type; molecular weight: 4000), 1 part by weight of polydimethylsiloxane KF-96-1000000CS produced by Shin-Etsu Chemical Co., Ltd. (kinetic viscosity at 25°C: 100 × 10⁴ cSt), and 1 part by weight of NUC-8350 produced by Nippon Unicar Company Limited (low density polyethylene; density: 0.916 g/cm³; number average molecular weight: 22000; MI: 18 g/10 minutes).

### (2) POM-2

Polyacetal containing 1.5 mol% of oxyalkylene repeat unit having a carbon number of 2 or greater and 6 or less, which is represented by the above formula (1), was used as it was.

### (c) Preparation of the filament

A monofilament production apparatus including a monoaxial extruder having a diameter of 25 mm, a gear pump, a screen and a spinning nozzle was used. The cylinder temperature of the extruder was set to 200°C, and the spinning was performed at an ejection amount of 10 kg/h. A 200-mesh metal net was inserted as the screen, and the spinning was performed through the nozzle of φ1 mm × 24 holes. The filament was once cooled to be solidified in a water tank set to 40°C, and then heated by oil set to 110°C. Then, the filament was stretched. The obtained filament was cut into a length of 70 mm.

The filaments produced from the materials POM-1 and POM-2 were named POM-1 and POM-2, respectively.

### (d) Production of the brush

About 550 filaments were planted into holes made in a head part formed of soft polyethylene, and then cut to have a prescribed height. Thus, a brush was produced. For planting, the filaments were folded into a U shape and inserted into the holes, and the folding parts of the filaments were put into engagement with the head part using an embedding metal fitting also having a U shape.

### <Examples 1, 2 and Comparative example 1>

In Example 1, the filament POM-1 obtained by the method described above was used. In Example 2, the filament POM-2 obtained by the method also described above was used. In Comparative example 1, an existing nylon filament, which is a copolymer of nylon 6,6 and nylon 6 (composition ratio: 5:1) and contains several percent of silicone resin, was used.

Table 1 shows the physical properties of each filament. Table 2 shows the results of the scratch test which was performed on the brush produced using each filament shown in Table 1. For the scratch test, an aluminum plate which is a general material for machining (A5052 produced by Kobe Steel, Ltd.) was used as a material to be scratched. It was revealed that a brush formed of POM having a high flexural rigidity did not easily damage A5052 even under a high load.

**Table 1**

| Filament | Filament diameter | Linear strength | Stretched rate | Flexural rigidity |
|---|---|---|---|---|
| | µm | g/D | % | µg·m²/yarn |
| POM-1 | 159 | 3.3 | 12 | 4.4 |
| POM-2 | 144 | 7.5 | 12 | 6.9 |
| Nylon | 150 | 5.6 | 47 | 1.9 |

**Table 2**

| | Number of filaments | Height of brush | Likeliness of damaging A5052 | | | |
|---|---|---|---|---|---|---|
| | pieces | mm | 0.01N | 0.10N | 0.25N | 0.45N |
| Example 1 | 535 | 18 | OK | OK | Damage is made after scratching 5 times | - |
| Example 2 | 545 | 18 | OK | OK | OK | Damage is made after scratching 10 times |
| Comparative example 1 | 570 | 18 | Damage is made after scratching 10 times | - | - | - |

In the table, "OK" means that no damage was made in the scratch test.

## Claims

1. A brush comprising polyacetal-containing filaments, wherein the flexural rigidity per filament is 2 to 50 µg·m²/yarn, wherein the polyacetal contains at least one selected from polyethylene wax, silicone oil and polyethylene resin,
wherein the number average molecular weight of the polyethylene wax is 1000 to 10000, the kinetic viscosity of the silicone oil at 25°C is 100 × 10⁴ to 1000 × 10⁴ cSt, and the melting viscosity of the polyethylene resin is 0.1 to 100 g/10 minutes as represented by the melting index (MI) based on ASTM-D1238 measuring conditions: 190°C; under a load of 2.16 kg.

2. The brush according to claim 1, wherein the polyacetal contains 0.2 to 15 mol% of oxyalkylene repeat unit having a carbon number of 2 or greater and 6 or less, which is represented by the following formula (1): 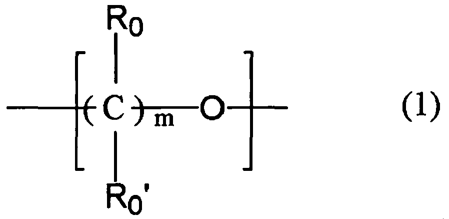 in the formula, R₀ and R₀' each represent a hydrogen atom, an alkyl group, an organic group having an alkyl group, a phenyl group or an organic group having a phenyl group; and m represents an integer of 2 to 6.

## Patentansprüche

1. Bürste, umfassend Polyacetal-enthaltende Filamente, wobei die Biegesteifigkeit pro Filament zwei bis 50 µg·m²/Garn beträgt, wobei das Polyacetal mindestens eines, ausgewählt aus Polyethylenwachs, Silikonöl und Polyethylenharz, enthält,
wobei das zahlenmittlere Molekulargewicht des Polyethylenwachses 1000 bis 10000 beträgt, die kinetische Viskosität des Silikonöls bei 25°C 100 x 10⁴ bis 1000 x 10⁴ cSt beträgt und die Schmelzviskosität des Polyethylenharzes 0,1 bis 100 g/10 Minuten, dargestellt durch den Schmelzindex (MI) basierend auf ASTM-D1238, Meßbedingungen: 190°C, unter einer Belastung von 2,16 kg, beträgt.

2. Bürste gemäß Anspruch 1, wobei das Polyacetal 0,2 bis 15 Mol-% Oxyalkylenwiederkehrender Einheit mit einer Kohlenstoffzahl von 2 oder größer und 6 oder weniger enthält, welche durch die folgende Formel (1) dargestellt wird: 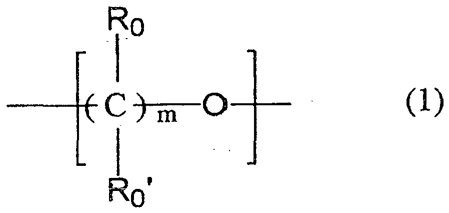 wobei in der Formel R₀ und R₀' jeweils ein Wasserstoffatom, eine Alkylgruppe, eine organische Gruppe mit einer Alkylgruppe, eine Phenylgruppe oder eine organische Gruppe mit einer Phenylgruppe darstellen und m eine ganze Zahl von 2 bis 6 darstellt.

## Revendications

1. Pinceau comprenant des filaments contenant du polyacétal, dans lequel la rigidité flexurale par filament est de 2 à 50 µg.m²/fil, dans lequel le polyacétal contient au moins l'une sélectionnée parmi la cire de polyéthylène, l'huile de silicone et la résine de polyéthylène,
dans lequel le poids moléculaire moyen en nombre de la cire de polyéthylène est de 1 000 à 10 000, la viscosité cinématique de l'huile de silicone à 25°C est de 100 x 10⁴ à 1000 x 10⁴ cSt, et la viscosité à l'état fondu de la résine de polyéthylène est de 0,1 à 100 g/10 minutes telle que représentée par l'indice de fluidité (IF) en se fondant sur les conditions de mesure ASTM-D1238 : 190°C ; sous une charge de 2,16 Kg.

2. Pinceau selon la revendication 1, dans lequel le polyacétal contient 0,2 à 15% en mole d'unités répétitives d'oxyalkylène ayant un nombre de carbones de 2 ou supérieur et de 6 ou inférieur, lequel est représenté par la formule (I) suivante : 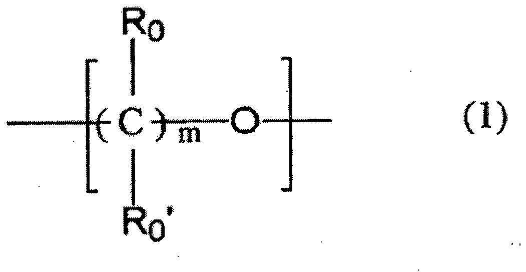 dans la formule, R₀ et R₀' représentant chacun un atome d'hydrogène, un groupe alkyle, un groupe organique comportant un groupe alkyle, un groupe phényle ou un groupe organique comportant un groupe phényle ; et m représentant un nombre entier de 2 à 6.
